# EUROPÄISCHE PATENTSCHRIFT

(11) **EP 3 331 777 B1**
(45) Veröffentlichungstag und Bekanntmachung des Hinweises auf die Patenterteilung: **20.11.2019**
(21) Anmeldenummer: 17731558.7
(22) Anmeldetag: 20.06.2017
(51) Int. Cl.: B65D 85/48, B65D 19/44

(54) **VORRICHTUNG UND VERFAHREN ZUM LAGERN UND/ODER ZUM TRANSPORT VON PLATTENFÖRMIGEN GEGENSTÄNDEN**
DEVICE AND METHOD FOR STORING AND/OR FOR TRANSPORTING PLATE-LIKE ARTICLES
DISPOSITIF ET PROCÉDÉ DE STOCKAGE ET/OU DE TRANSPORT D'ARTICLES EN FORME DE PLAQUE

(30) Priorität: 28.10.2016 AT 5022916 U
(43) Veröffentlichungstag der Anmeldung: 13.06.2018
(73) Patentinhaber: LISEC Austria GmbH, 3353 Seitenstetten (AT)
(72) Erfinder: MADER, Leopold, 3364 Neuhofen/Ybbs (AT)
(74) Vertreter: Beer & Partner Patentanwälte KG
(86) Internationale Anmeldenummer: PCT/EP2017/065129
(87) Internationale Veröffentlichungsnummer: WO 2018/077489

(56) Entgegenhaltungen:
- DE-U1- 9 400 411
- FR-A5- 2 242 873
- JP-A- 2004 338 740
- US-A- 4 202 452
- US-A1- 2004 245 195
- US-A1- 2006 014 618
- US-A1- 2012 000 866
- US-B1- 6 510 950

## Beschreibung

Die Erfindung betrifft eine Vorrichtung zum Lagern und/oder zum Transport von, vorzugsweise im Wesentlichen vertikal ausgerichteten, plattenförmigen Gegenständen, insbesondere Isolierglaselementen, mit Auflageebenen und mit Fächer begrenzenden Fachbegrenzern, wobei die Auflageebenen einen Auflagebereich begrenzen, wobei wenigstens Teile von Fachbegrenzern in eine Wirklage, in welcher Teile die Auflageebenen durchgreifen und in den Auflagebereich ragen, bewegbar sind, wobei Fachbegrenzer mit ihren in den Auflagebereich ragenden Teilen im Auflagebereich Fächer für plattenförmige Gegenstände bilden, wobei Fachbegrenzer aus der Wirklage heraus in eine Bereitschaftslage bewegbar sind, in der Fachbegrenzer außerhalb des Auflagebereiches angeordnet sind, und wobei Fachbegrenzer an Positionierleisten verstellbar angeordnet, entlang Positionierleisten verschiebbar und mit gewähltem Abstand voneinander an Positionierleisten gegen Verstellen form- und/oder kraftschlüssig festlegbar sind.

Weiters betrifft die Erfindung ein Verfahren zum Lagern und/oder zum Transport von, vorzugsweise im Wesentlichen vertikal ausgerichteten, plattenförmigen Gegenständen, insbesondere Isolierglaselementen, wobei die plattenförmigen Gegenstände in Fächern, die in einem Auflagebereich einer Vorrichtung gebildet werden, aufgenommen werden, wobei die Fächer für die Aufnahme plattenförmiger Gegenstände durch Fachbegrenzer gebildet werden, und wobei die Breite der Fächer an die Dicke der plattenförmigen Gegenstände angepasst eingestellt wird, indem wenigstens Teile von Fachbegrenzern in den Auflagebereich hinein oder aus diesem heraus bewegt werden und/oder der Abstand zwischen Fachbegrenzern geändert wird.

Isolierglaselemente umfassen wenigstens zwei zueinander parallele Glasscheiben, die durch einen zwischen den Scheiben eingeklebten, entlang des Scheibenrandes nach innen versetzt verlaufenden Abstandhalter, beispielsweise ein Aluminiumprofil oder ein Abstandhalter aus Kunststoff, auf Abstand gehalten und miteinander verbunden werden. Die zwischen den Glasscheiben liegende und vom Abstandhalter nach innen begrenzte, nach außen hin offene Randfuge ist mit Dichtmasse (Versiegelungsmasse) versiegelt.

Da unterschiedlich breite Abstandhalter zwischen den Glasscheiben verwendet werden und Isolierglaselemente mit mehr als zwei Glasscheiben nach dem oben beschriebenen Prinzip aufgebaut sein können, gibt es Isolierglaselemente nicht nur mit unterschiedlichen Formen, Längen und Breiten, sondern auch mit unterschiedlichen Dicken.

Aufgrund der Größenunterschiede und aufgrund der Tatsache, dass die Dichtmasse nach Fertigung der Isolierglaselemente erst nach ein bis zwei Wochen ausreichend verfestigt ist, ergeben sich spezielle Anforderungen an Vorrichtungen zum Lagern und für den Transport von Isolierglaselementen, insbesondere wenn die Isolierglaselemente in der Vorrichtung möglichst platzsparend und vor äußerer Krafteinwirkung geschützt aufgenommen werden sollen.

Eine Vorrichtung zum Lagern und/oder zum Transport von plattenförmigen Gegenständen ist aus DE 20 2013 010 500 U1 bekannt. An einem L-förmigen Grundgerüst sind in Auflageebenen mehrere Anlageleisten angeordnet, die mit keilförmigen Zähnen bestückt sind. Die als Fachbegrenzer dienenden Zähne sind mit der Anlageleiste fest verbunden, in gleichmäßigem Abstand voneinander entlang der Anlageleiste angeordnet und ragen in den Auflagebereich hinein, sodass von den Fachbegrenzern Fächer für die Aufnahme von plattenförmigen Gegenständen (wie Isolierglaselementen) gebildet werden. Da sich die Zähne von der Anlageleiste weg verjüngen, können plattenförmige Gegenstände unterschiedlicher Dicke zwischen den Zähnen aufgenommen werden, wobei die plattenförmigen Gegenstände mit Außenkanten auf Flanken der Zähne anliegen. Nachteilig ist, dass durch das Eigengewicht der plattenförmigen Gegenstände in Verbindung mit der Schräge der Flanken der Zähne auf die plattenförmigen Gegenstände eine seitliche Kraftkomponente wirkt, was für den Fall, dass es sich um frisch gefertigte Isolierglaselemente handelt, ungünstig ist und zu unerwünschten Verformungen der Isolierglaselemente führen kann. Weiters findet in der Vorrichtung immer nur eine durch Größe, Anzahl und Abstand der Zähne vorbestimmte Anzahl an Isolierglaselementen Platz.

Eine gattungsgemäße Vorrichtung ist aus DE 94 00 411 U1 bekannt. Darin ist ein Speicher in Form eines Glastransportwagens beschrieben, der einen Aufnahmebereich für plattenförmige Gegenstände aufweist, welcher durch einen horizontalen Boden und einer damit verbundenen, lotrechten Rückwand definiert bzw. begrenzt wird. In dem Aufnahmebereich werden mit Hilfe von Fachbegrenzern, die an Positionierleisten angeordnet und um diese verschwenkbar sind, Fächer gebildet. Die Fachbegrenzer werden dafür entlang der Positionierleiste verschoben und per Hand aus einer Bereitschaftslage (lotrechte Ausrichtung) in eine Wirklage (horizontale Ausrichtung) verschwenkt, in der sie auf einer Auflageleiste aufliegen. Nachteilig ist, dass das manuelle verstellen der Fachbegrenzer sehr arbeits- und zeitintensiv ist.

Aus US 8,025,161 B2 ist eine Vorrichtung zum Lagern und/oder zum Transport von plattenförmigen Gegenständen bekannt. Zwischen fix mit einem Rahmensystem verbundenen Stabelementen, die in einen Aufnahmebereich hineinragen, sind Fächer gebildet, in denen plattenförmige Gegenstände, im Wesentlichen vertikal stehend ausgerichtet, aufgenommen sind.

Aus US 7,249,682 B2 ist eine Vorrichtung zum Lagern und/oder zum Transport von plattenförmigen Gegenständen bekannt, bei der die plattenförmigen Gegenstände durch Klemmelemente, die an mehreren Stellen der Gegenstände angreifen und an einem Grundgerüst angeordnet sind, im Wesentlichen vertikal stehend ausgerichtet festgehalten werden. Die Klemmkraft der Klemmelemente wird durch den Klemmelementen zugeordnete Federn erzeugt. Die Klemmelemente lassen sich über einen Mechanismus gleichzeitig öffnen.

In US 7,044,066 B1 ist eine Vorrichtung zum Lagern und/oder zum Transport von plattenförmigen Gegenständen mit einem palettenförmigen Grundgestell und daran angeordneten Fachbegrenzern beschrieben. Die Fachbegrenzer sind aus einer waagrechten in eine lotrechte Position verschwenkbar, in der Ebene des Grundgestells verschiebbar und in gewählter Stellung festlegbar. Durch Verschwenken und Positionieren der Fachbegrenzer wird ein Fach für die Aufnahme plattenförmiger Gegenstände gleicher Form gebildet, die flächig am Grundgestell bzw. aufeinander aufliegend angeordnet werden.

In US 2004/0131441 A1 ist eine Vorrichtung zum Lagern und/oder zum Transport von plattenförmigen Gegenständen beschrieben, wobei die Vorrichtung eine Grundplatte und davon abstehende Rahmen umfasst. An den Rahmen sind Fachbegrenzer einzeln um zur Grundplatte parallel ausgerichtete Achsen verschwenkbar. Die Fachbegrenzer liegen aneinander an oder sind durch Abstandhalter voneinander um vorgegebene Abstände beabstandet. Durch Verschwenken von zwei benachbarten Fachbegrenzern wird zwischen diesen, aufgrund von Ausnehmungen an den Fachbegrenzern, ein Fach für die Aufnahme eines vertikal auf der Grundplatte stehenden, plattenförmigen Gegenstandes gebildet.

Aus US 2006/0014618 A1 ist eine Vorrichtung zum Lagern und/oder zum Transport von plattenförmigen Gegenständen bekannt, bei der in von einer Grundplatte abstehenden Rahmen zur Grundplatte parallele Achsen angeordnet sind. Auf die Achsen mit rundem Querschnitt sind selbstklemmende Fachbegrenzer aufgesteckt, die um die Achsen verschwenkt werden können, wodurch zwischen den Fachbegrenzern Fächer für vertikal stehende plattenförmige Gegenstände gebildet werden.

Der Erfindung liegt die Aufgabe zugrunde, eine Vorrichtung der eingangs genannten Gattung zur Verfügung zu stellen, welche die Nachteile des Standes der Technik nicht aufweist. Insbesondere soll die Aufnahme von plattenförmigen Gegenständen unterschiedlicher Dicke möglich sein, ohne dass auf diese plattenförmigen Gegenstände unerwünschte Kräfte einwirken.

Gelöst wird diese Aufgabe erfindungsgemäß mit einer Vorrichtung, welche die Merkmale des Anspruches 1 aufweist, und mit einem Verfahren, welches die Merkmale des Anspruches 16 oder 17 aufweist.

Bevorzugte und vorteilhafte Ausführungsformen der Erfindung sind Gegenstand der Unteransprüche.

Erfindungsgemäß ist vorgesehen, dass Positionierleisten wenigstens ein Bedienwerkzeug zugeordnet ist, wobei das Bedienwerkzeug mit einem Antrieb verbunden ist und parallel zur zugeordneten Positionierleiste in eine einem Fachbegrenzer zugeordnete Stellung bewegbar ist, und dass Fachbegrenzer durch das Bedienwerkzeug betätigbar sind, um Fachbegrenzer, beispielsweise durch das Verschwenken des Fachbegrenzers um eine Positionierleiste, zumindest mit einem Teil in den Auflagebereich hinein und/oder aus diesem heraus zu bewegen.

Die an erfindungsgemäß vorgesehenen Fachbegrenzern vorgesehenen Teile, die in der Wirklage der Fachbegrenzer in den Auflagebereich hineinragen, können Kopfbereiche der Fachbegrenzer sein.

Die Fachbegrenzer sind entlang der Positionierleisten verschiebbar. Durch das, vorzugsweise voneinander unabhängige, Verschieben von Fachbegrenzern in Längsrichtung von Positionierleisten kann die Breite eines jeden durch Fachbegrenzer gebildeten Faches unabhängig von der Breite anderer Fächer gewählt und an die Dicke eines aufzunehmenden plattenförmigen Gegenstandes angepasst werden. In der erfindungsgemäßen Vorrichtung können somit plattenförmige Gegenstände aufgenommen werden, ohne dass dazwischen größere, ungenutzte Leerräume vorliegen.

Bevorzugt ist es, wenn Auflageleisten, an welchen plattenförmige Gegenstände an- oder aufliegen, in den Auflageebenen und die Positionierleisten parallel zu den Auflageebenen und außerhalb des Auflagebereichs angeordnet sind. Die Auflageleisten, auf denen die plattenförmigen Gegenstände an- oder aufliegen, können gepolstert oder mit weichem Material überzogen oder aus weichem Material gefertigt sein, um ein Abschlagen oder Zerkratzen der Kanten oder ein Zerkratzen plattenförmiger Gegenstände zu verhindern und beim Be- und Entladen plattenförmiger Gegenstände schwingungs- und schlagdämpfend zu wirken.

Vorzugsweise weist die erfindungsgemäße Vorrichtung ein im Wesentlichen L-förmiges Grundgerüst auf, das einen im Wesentlichen waagrechten Bodenbereich mit einer Auflageebene und einen im Wesentlichen lotrechten Stützbereich mit einer weiteren Auflageebene umfasst. Plattenförmige Gegenstände liegen bei dieser Ausführungsform, vorzugsweise mit ihren Rändern, an beiden Auflageebenen an. Die Auflageebene des Stützbereiches ist von der Lotrechten weg geneigt. Die mit ihr einen rechten Winkel einschließende Auflageebene des Bodenbereiches kann zur Waagerechten geneigt sein. Vorzugsweise fällt die Auflageebene des Bodenbereiches zum Stützbereich hin ab und die plattenförmigen Gegenstände können nicht in Richtung der dem Stützbereich gegenüberliegenden Seite von der Vorrichtung herunterkippen.

In einer Ausführungsform weist die erfindungsgemäße Vorrichtung ein im Wesentlichen A-förmiges (umfassend zwei spiegelsymmetrisch angeordnete, L-förmige Grundgerüste) Grundgerüst auf, das zwei im Wesentlichen waagrechte Bodenbereiche mit zwei Auflageebenen und zwei im Wesentlichen lotrechte, aufeinander zulaufende Stützbereiche mit zwei weiteren Auflageebenen umfasst. Bevorzugt sind beide Seiten des A-förmigen Grundgerüsts mit den erfindungsgemäßen Fachbegrenzern versehen. Im Rahmen der Erfindung ist auch in Betracht gezogen, nur eine Seite eines A-förmigen Grundgerüstes erfindungsgemäß auszubilden.

Wenn die erfindungsgemäße Vorrichtung zum Transport von plattenförmigen Gegenständen bestimmt ist, kann sie in einer vorteilhaften Ausführungsform am Grundgerüst, insbesondere an der Unterseite des Bodenbereiches des Grundgerüstes, Räder oder Rollen aufweisen, sodass das Grundgerüst am Boden oder auf Schienen bewegt werden kann.

In einer vorteilhaften Ausführungsform ist vorgesehen, dass Fachbegrenzer einen an der ihnen zugeordneten Positionierleiste angeordneten Fußbereich und einen mit dem Fußbereich in Verbindung stehenden, insbesondere an diesen angeformten und von der Positionierleiste abstehenden, Kopfbereich aufweisen, der, vorzugsweise durch Verschwenken des Fußbereiches um die Positionierleiste, zumindest mit einem Teil durch eine der Auflageebenen in den Auflagebereich hinein und aus diesem heraus bewegbar ist.

Vorteilhaft ist, wenn Kopfbereiche zwei Anlegeflächen aufweisen. Ein Kopfbereich ist vorzugsweise in Wirklage zum Abstandhalten zwischen zwei plattenförmigen Gegenständen und/oder zum Festlegen (Einklemmen) und/oder Positionieren der plattenförmigen Gegenstände durch eine der Auflageebenen in den Auflagebereich hinein bewegbar, wobei zumindest eine Anlegefläche in Wirklage mit einem plattenförmigen Gegenstand in Kontakt steht, insbesondere an diesen angelegt ist.

Im Rahmen der Erfindung ist besonders bevorzugt, wenn durch die Fachbegrenzer, insbesondere durch deren Kopfbereiche und Anlegeflächen, kein seitlicher Druck auf in den Fächern aufgenommene plattenförmige Gegenstände, insbesondere Isolierglaselemente, ausgeübt wird, wenn diese an den plattenförmigen Gegenständen anliegen. Somit wirken beispielsweise auf frisch gefertigte Isolierglaselemente keine seitlichen Kräfte, die zu Verformungen führen können, und die Versiegelungsmasse der Isolierglaselemente kann während der Lagerung oder während des Transportes in der erfindungsgemäßen Vorrichtung aushärten.

Vorteilhaft ist, wenn Fachbegrenzer an Positionierleisten in deren Längsrichtung verstellbar angeordnet sind.

Im Rahmen der Erfindung sind die Fachbegrenzer mit Abstand voneinander an Positionierleisten, insbesondere selbstklemmend, festlegbar. Der Abstand der Fachbegrenzer voneinander kann geändert werden, indem die Fachbegrenzer manuell oder maschinell gelöst, beispielsweise entklemmt, und entlang der Positionierleiste verschoben werden. Dadurch können Fächer für plattenförmige Gegenstände unterschiedlicher Dicke gebildet werden. Vorteilhaft ist, wenn die Fachbegrenzer aus einer festgelegten Position nicht oder nur mit erhöhtem Kraftaufwand verstellt, beispielsweise verschoben, werden können. So wird ein unerwünschtes Bewegen von Fachbegrenzern und Kippen von plattenförmigen Gegenständen verhindert.

Ebenso ist es im Rahmen der Erfindung denkbar, dass Fachbegrenzer an einer gewählten Position an der Positionierleiste formschlüssig festgelegt sind, beispielsweise indem die Positionierleiste eine Zahnleiste ist und Fachbegrenzer in die Zahnleiste eingreifende Elemente aufweisen.

In einer vorteilhaften Ausführungsform der Erfindung ist vorgesehen, dass Fachbegrenzer Fußbereiche aufweisen, die jeweils zwei voneinander beabstandete, im Wesentlichen plattenförmige Schenkelelemente mit jeweils einer Innenfläche und einer Außenfläche umfassen. Die Innenflächen sind einander zugewandt und schließen miteinander einen (spitzen) Winkel ein. Durch elastisches Verbiegen können bei dieser Ausführungsform die Schenkelelemente einander angenähert werden, sodass in einem durch auf die Außenflächen aufgebrachte Druckkraft herbeigeführten Loszustand des Fachbegrenzers, bei dem der Winkel zwischen den Innenflächen der Schenkelelemente verringert ist, ein Fachbegrenzer entlang der Positionierleiste verschoben werden kann.

Jedes Schenkelelement weist in einer möglichen Ausführungsform ein in Form und Größe dem Querschnitt der Positionierleiste angepasstes, die Innenfläche und die Außenfläche verbindendes, Loch auf, in dem die Positionierleiste aufgenommen ist. Im Loszustand, bei verringertem Winkel, besteht ein (geringes) Spiel zwischen der Positionierleiste und den Schenkelelementen, sodass der Fachbegrenzer entlang der Positionierleiste bewegt (verschoben) werden kann. Im Klemmzustand, bei dem kein oder zu wenig Druck auf die Außenflächen der Schenkelelemente ausgeübt wird, wodurch der Winkel zwischen den Schenkelelementen vergrößert ist, verkanten die Schenkelelemente mit der in den Löchern aufgenommenen Positionierleiste so, dass der Fachbegrenzer an der Positionierleiste reibschlüssig in einer bestimmten (vorgewählten) Position klemmend (d.h. kraftschlüssig) festgelegt ist.

In einer weiteren Ausführungsform der Erfindung weisen die Fachbegrenzer Fußbereiche auf, die stabförmig und im Querschnitt ellipsenförmig ausgebildet sind. Ein Fußbereich ist zwischen zwei zueinander parallelen und voneinander beabstandeten Leisten aufgenommen. Der Abstand der Leisten voneinander ist so gewählt, dass er zwischen dem Maximaldurchmesser und dem Minimaldurchmesser des elliptischen Fußbereiches des Fachbegrenzers liegt. Durch Verdrehen des Fachbegrenzers kann dieser zwischen den Leisten entweder fixiert (geklemmt) oder gelöst und dann verstellt werden.

In einer weiteren Ausführungsform der Erfindung ist die Positionierleiste mit elliptischem Querschnitt ausgeführt. Die Fachbegrenzer sind im Fußbereich so ausgestaltet, beispielsweise indem sie Löcher aufweisen, die eine elliptische Form haben, dass sie beim Einschwenken in den Auflagebereich in ihrer festgelegten Position fixiert (geklemmt) und beim Herausschwenken aus dem Auflagebereich gelöst werden.

In einer weiteren Ausführungsform der Erfindung ist vorgesehen, dass eine Positionierleiste mit elliptischem Querschnitt drehbar ausgeführt ist und das Fixieren (Klemmen) und Lösen der Fachbegrenzer durch Verdrehen der Positionierleiste bewirkt wird.

Im Rahmen der Erfindung kann die Positionierleiste im Querschnitt auch anders als kreisrund oder elliptisch, beispielsweise mehreckig, quadratisch, rechteckig, etc., ausgebildet sein.

In einer Ausführungsform der Erfindung kann vorgesehen sein, dass Fachbegrenzer einzeln oder aber mehrere, insbesondere benachbarte, Fachbegrenzer gemeinsam mit zumindest einem Teil in den Auflagebereich hinein und aus diesem heraus bewegbar sind, insbesondere durch Verschwenken von Fachbegrenzern um Positionierleisten. Dafür kann beispielsweise ein Mechanismus vorgesehen sein, der mehrere Fachbegrenzer miteinander, insbesondere lösbar, koppelt.

In einer bevorzugten Ausführungsform der Erfindung werden alle Fachbegrenzer, die für das Positionieren eines plattenförmigen Gegenstandes benötigt werden, gleichzeitig verschoben.

Besonders vorteilhaft ist, wenn das Verschwenken von Fachbegrenzern durch eine der Auflageleisten und/oder durch wenigstens einen Anschlag, insbesondere eine Anschlagleiste, auf einen vordefinierten und/oder einstellbaren Verschwenkbereich begrenzt ist. Eine Anschlagleiste kann an einer Auflageleiste oder an einer anderen Stelle am Grundgerüst außerhalb des Auflagebereiches angeordnet sein.

In einer besonders bevorzugten Ausführungsform der Erfindung sind die Fachbegrenzer einstückig ausgeführt, insbesondere aus einem Stück gegossen oder gestanzt. Erfindungsgemäße Fachbegrenzer können ebenso aus mehreren Einzelstücken zusammengesetzt, z.B. zusammengeschweißt oder -geklebt, sein.

Die Fachbegrenzer sind vorzugsweise aus Kunststoff oder Metall gefertigt.

Im Rahmen der Erfindung ist auch in Betracht gezogen, dass die Fachbegrenzer aus unterschiedlichen Bauteilen zusammengesetzt sind und/oder aus unterschiedlichen Materialien bestehen.

Besonders vorteilhaft ist es im Rahmen der Erfindung, wenn alle Fachbegrenzer gleich beschaffen und geformt sind. Sie können sich jedoch auch in Form und Beschaffenheit voneinander unterscheiden.

Im Rahmen der Erfindung ist vorgesehen, dass Fachbegrenzer, insbesondere alle Fachbegrenzer oder eine Gruppe derselben, durch einen Antrieb, insbesondere durch das Verschwenken von Fachbegrenzern um Positionierleisten mit Teilen der Fachbegrenzer, insbesondere mit dem Kopfbereich der Fachbegrenzer, in den Auflagebereich hinein und aus dem Auflagebereich heraus bewegbar sind.

Weiters sind Fachbegrenzer von einem Antrieb entlang der Positionierleiste verschiebbar.

Bei einem automatisierten System können die Arbeitsabläufe optimiert und dadurch Kosten gesenkt werden. Zusätzlich wird das Unfallrisiko für Personen vermindert.

Gemäß der Erfindung, ist/sind Positionierleisten ein oder mehrere mit einem Antrieb verbundene(s) Bedienwerkzeug/e zugeordnet.

Bedienwerkzeuge sind parallel zu ihnen zugeordneten Positionierleisten bewegbar und können an jedem Fachbegrenzer in Stellung gebracht werden.

Im Rahmen der Erfindung ist vorgesehen, dass Fachbegrenzer durch ein oder mehrere Bedienwerkzeug/e bewegbar sind, insbesondere indem zumindest ein Teil der Fachbegrenzer durch das/die Bedienwerkzeug/e in den Auflagebereich hinein und aus dem Auflagebereich heraus bewegbar oder schwenkbar ist. Vorteilhaft ist, wenn Fachbegrenzer durch das Bedienwerkzeug zusätzlich lösbar, entlang der Positionierleiste verschiebbar und wieder festlegbar (verklemmbar) sind.

In einer weiteren Ausführungsform der Erfindung weisen Fachbegrenzer, vorzugsweise automatisch, füllbare Elemente auf. Solche Elemente, beispielsweise Polster oder Ballons, sind durch Einleiten von Fluid, wie Gas oder Flüssigkeit, vergrößerbar und dadurch, zumindest teilweise, in den Auflagebereich hinein bewegbar und durch Auslassen des Fluides verkleinerbar und dadurch aus dem Auflagebereich heraus bewegbar. Das füllbare Element kann der gesamte, an den Fußbereich angeordnete Kopfbereich des Fachbegrenzers sein.

Weiters kann erfindungsgemäß vorgesehen sein, dass füllbare Elemente aus elastischem oder nicht elastischem Material bestehen. Außerdem kann vorgesehen sein, dass füllbare Elemente mit formstabilem oder formsteifem Stoff oder Kunststoff überzogen sind.

Eine weitere Ausführungsform der Erfindung sieht vor, dass die Form, insbesondere die Breite, von füllbaren Elementen über formstabile oder formsteife Elemente oder Überzüge, beispielsweise ineinander verschiebbare bzw. teleskopierbare Ringe oder Stoffüberzüge aus Kunst- oder Naturstoff, unterstützt wird.

Eine weitere erfindungsgemäße Ausführungsform von füllbaren Elementen sieht vor, dass diese ungefüllt (oder wenig gefüllt) entlang von Positionierleisten verschiebbar und nach dem Füllen (oder Vollfüllen) auf Positionierleisten, durch die mit dem Füllen einhergehende Vergrößerung der Elemente, fixiert (verklemmt) und nicht mehr verschiebbar sind. Die füllbaren Elemente vergrößern (dehnen) sich vorzugsweise nur in ihrer Höhe (d.h. in ihrer quer zur Positionierleiste messbaren Größe) derart, dass eine Klemmwirkung erreicht wird, nicht jedoch in ihrer Breite.

Beispielsweise sieht eine Ausführungsform der Erfindung vor, dass Fachbegrenzer einen auf eine Positionierleiste aufgeschobenen Fußbereich und einen füllbaren Kopfbereich umfassen. Der Kopfbereich ist nach dem Füllen mit Fluid vergrößert, wobei ein oder mehrere Teile des füllbaren Kopfbereiches gegen die Positionierleiste drücken und den Fachbegrenzer in seiner Position festlegen (verklemmen).

Eine weitere erfindungsgemäße Ausführungsform füllbarer Elemente sieht vor, dass füllbare Elemente in zweigeteilte Klemmbacken eingespannt sind, die beispielsweise zwischen Positionierleisten oder Auflageleisten geführt, insbesondere verschieb- oder verfahrbar angeordnet, sind. Die Klemmbacken drücken (verspreizen sich) wegen der durch das Füllen der füllbaren Elemente bewirkten Vergrößerung gegen die Positionier- oder Auflageleisten und legen somit Fachbegrenzer in ihrer Position, beispielsweise durch Verklemmen (kraftschlüssig), fest. Füllbare Elemente von Fachbegrenzern können über Einzelschläuche und/oder über ein externes Schlauchsystem und/oder über ein Rohrsystem im Inneren der Vorrichtung, insbesondere im Inneren von Positionierleisten, durch die/das Fluid, beispielsweise ein Gas, zugeführt, z.B. gepumpt wird, gefüllt werden. Unterschiedlich große (breite) Fächer für plattenförmige Gegenstände können beispielsweise durch unterschiedlich starkes Füllen (z.B. Aufpumpen) von Fachbegrenzern, durch Verschieben und anschließendes Füllen (und Festlegen) von Abstandhaltern in vorbestimmtem Abstand zueinander und/oder durch Füllen nur einzelner, ausgewählter Abstandhalter gebildet werden.

Ein erfindungsgemäßes Verfahren sieht vor, dass die Breite der Fächer an die Dicke der plattenförmigen Gegenstände angepasst eingestellt wird. Die Breite der Fächer kann am Anfang des Verfahrens eingestellt werden oder aber auch während des Verfahrens ein- oder mehrmals eingestellt bzw. geändert werden. Beim erfindungsgemäßen Verfahren werden die Fächer für die Aufnahme plattenförmiger Gegenstände durch Fachbegrenzer gebildet und die Breite der Fächer wird eingestellt, wobei wenigstens Teile von Fachbegrenzern in den Auflagebereich hinein oder aus diesem heraus bewegt werden und optional der Abstand zwischen Fachbegrenzern verändert, insbesondere vergrößert oder verkleinert, wird. Dieses Verstellen von Fachbegrenzern erfolgt mit Hilfe eines Bedienwerkzeugs. Gemäß einer Ausführungsform erfolgt das Verstellen durch Einleiten eines Fluids in füllbare Elemente von Fachbegrenzern, wobei vorzugsweise jeder Fachbegrenzer ein füllbares Element aufweist. Bei einer bevorzugten Durchführungsform werden festgelegte Fachbegrenzer zuerst gelöst, dann wenigstens Teile dieser Fachbegrenzer bewegt und anschließend diese Fachbegrenzer wieder festgelegt.

Das Verfahren wird besonders bevorzugt im Zusammenhang mit einer erfindungsgemäßen Vorrichtung durchgeführt, kann aber auch davon unabhängig unter Zuhilfenahme anderer Vorrichtungen oder Werkzeuge durchgeführt werden.

Weitere Einzelheiten, Merkmale und Vorteile der Erfindung ergeben sich aus der nachstehenden Beschreibung unter Bezugnahme auf die angeschlossenen, teils schematischen, Zeichnungen, in welchen bevorzugte Ausführungsformen der Erfindung beispielhaft dargestellt sind. Es zeigt:
- Fig. 1: in isometrischer Ansicht eine Vorrichtung mit plattenförmigen Gegenständen,
- Fig. 2: in Seitenansicht die Vorrichtung mit eingezeichneten Auflageebenen,
- Fig. 3: das Detail A aus Fig. 1,
- Fig. 4: in Seitenansicht das Verschwenken eines Fachbegrenzers,
- Fig. 5: im Schnitt Fachbegrenzer im Klemmzustand und im Loszustand,
- Fig. 6: in isometrischer Ansicht einen Teil der Vorrichtung mit Bedienwerkzeugen,
- Fig. 7a: in Seitenansicht eine weitere Ausführungsform des Bedienwerkzeuges,
- Fig. 7b: in Seitenansicht noch eine weitere Ausführungsform des Bedienwerkzeuges,
- Fig. 8a: eine Ansicht einer Ausführungsform zum kraftschlüssigen Festlegen eines Fachbegrenzers an einer Positionierleiste,
- Fig. 8b: in Schnittansicht eine weitere Ausführungsform zum kraftschlüssigen Festlegen eines Fachbegrenzers an einer Positionierleiste,
- Fig. 8c: eine Ansicht des Details B aus Fig. 8b,
- Fig. 9a: eine Ansicht einer weiteren Ausführungsform zum kraftschlüssigen Festlegen von Fachbegrenzern zwischen Positionierleisten,
- Fig. 9b: eine Ansicht einer weiteren Ausführungsform zum kraftschlüssigen Festlegen von Fachbegrenzern mit einer Positionierleiste,
- Fig. 9c: eine Seitenansicht eines Abschnittes einer Vorrichtung in einer alternativen Ausführungsform mit Fachbegrenzern, die füllbare Elemente aufweisen,
- Fig. 10a: in Schnittansicht eine weitere Ausführungsform zum kraftschlüssigen Festlegen eines Fachbegrenzers an einer Positionierleiste, und
- Fig. 10b: in Schnittansicht noch eine weitere Ausführungsform zum kraftschlüssigen Festlegen eines Fachbegrenzers an einer Positionierleiste.

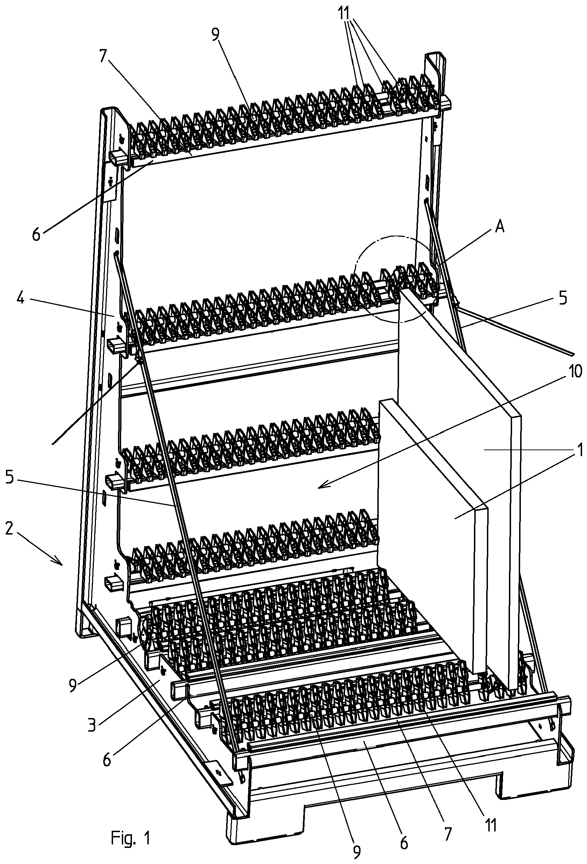

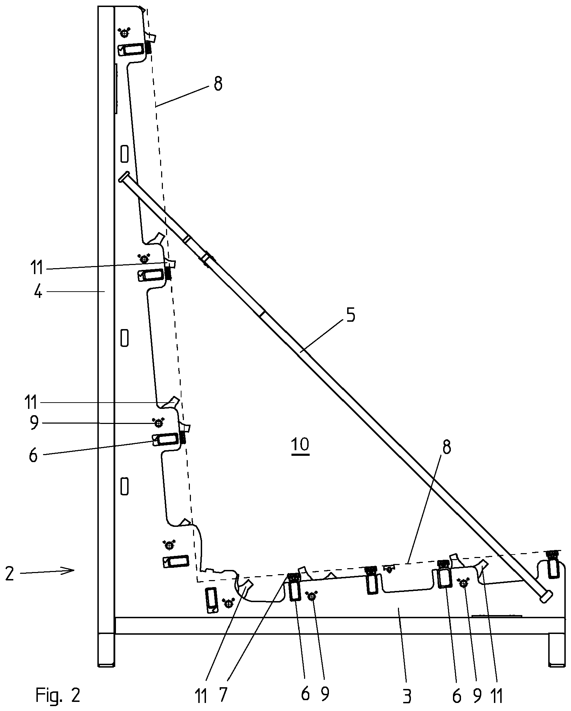

Fig. 1 und 2 zeigen eine erfindungsgemäße Vorrichtung zum Lagern und/oder zum Transport von vertikal stehenden, plattenförmigen Gegenständen 1, insbesondere von (frisch versiegelten) Isolierglaselementen. Die Vorrichtung weist ein L-förmiges Grundgerüst 2 umfassend einen Bodenbereich 3 und einen Stützbereich 4 auf. Spanngurte 5 verbinden den Bodenbereich 3 mit dem Stützbereich 4, um der Vorrichtung zusätzlich Stabilität zu verleihen. Die Vorrichtung mit darin gelagerten plattenförmigen Gegenständen 1 kann über an der Vorrichtung, beispielsweise an dem Bodenbereich 3 des Grundgerüstes 2, vorgesehene Rollen oder Räder bewegt werden.

Im Bodenbereich 3 und im Stützbereich 4 sind Auflageleisten 6 angeordnet, die an der dem Inneren (Auflagebereich 10) der Vorrichtung zugewandten Seite Polsterleisten 7 aufweisen. Durch die Auflageleisten 6 und die daran angeordneten Polsterleisten 7 werden Auflageebenen 8 gebildet, in denen plattenförmige Gegenstände 1 an den Polsterleisten 7 an- oder aufliegen. Die Auflageebenen 8 begrenzen gemeinsam einen Auflagebereich 10. Fig. 2 zeigt, dass die miteinander einen rechten Winkel einschließenden Auflageebenen 8 derart geneigt sind, dass plattenförmige Gegenstände 1 nicht in Richtung der dem Stützbereich 4 gegenüberliegenden Seite aus dem Auflagebereich 10 bzw. aus der Vorrichtung herausgleiten oder -kippen können.

Im Bereich der Auflageleisten 6 sind außerhalb des Auflagebereichs 10 und von den Auflageebenen 8 beabstandet Positionierleisten 9 angeordnet. Jede Positionierleiste 9 trägt mehrere Fachbegrenzer 11, die um die Positionierleisten 9 verschwenkbar sind, sodass zumindest ein Teil jedes Fachbegrenzers 11, beispielsweise ein Kopfbereich 12 der Fachbegrenzer 11, in den Auflagebereich 10 hinein bewegbar ist. In der so gegebenen Wirklage ragen die Fachbegrenzer 11 mit Teilen durch die Auflageebenen 8 in den Auflagebereich 10 hinein. Durch in Wirklage gebrachte Fachbegrenzer 11 werden durch Teile der Fachbegrenzer 11 im Auflagebereich 10 Fächer für plattenförmige Gegenstände 1 gebildet.

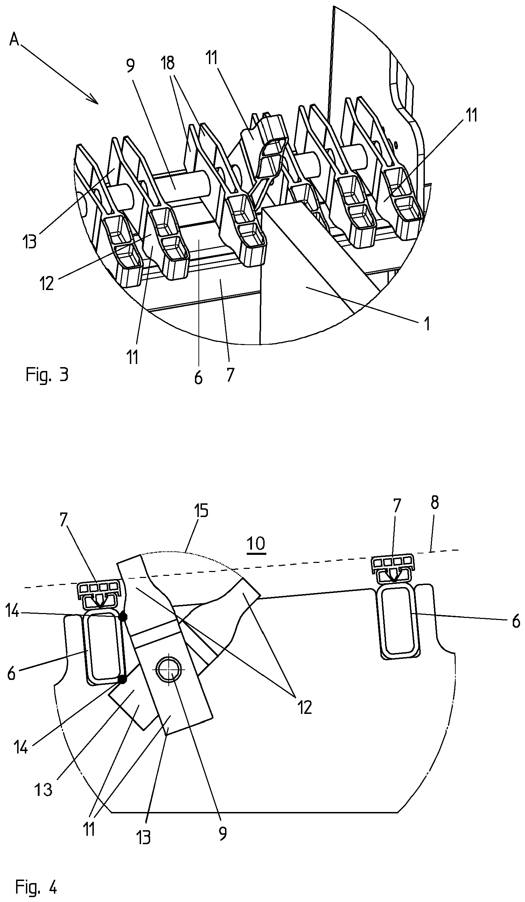

Fig. 3 und 4 zeigen das Verschwenken eines Fachbegrenzers 11, einmal in einer isometrischen Ansicht des Details A der Fig. 1 und einmal in einer schematischen Seitenansicht.

Fig. 3 zeigt, dass die Fachbegrenzer 11 voneinander unterschiedliche Abstände aufweisen können, sodass durch Fachbegrenzer 11 verschieden breite Fächer gebildet sein können. Damit Fächer vorliegen, die der Dicke eines in der Vorrichtung aufgenommenen, plattenförmigen Gegenstandes 1 entsprechen, werden Fachbegrenzer 11 entlang Positionierleisten 9 verschoben und dann an der entsprechenden Stelle der Positionierleiste 9 festgelegt, beispielsweise verklemmt.

In Fig. 3 ist auch zu sehen, dass einzelne Fachbegrenzer 11 aus ihrer Wirklage geschwenkt werden können, um die Aufnahme dickerer, plattenförmiger Gegenstände 1 zu ermöglichen. Das zeigt, dass bei einer vollständig bestückten Vorrichtung nicht alle Fachbegrenzer 11 in ihrer, Fächer bildenden Wirklage sein (und mit plattenförmigen Gegenständen 1 in Kontakt stehen) müssen.

Ein in Fig. 1 bis 5 dargestellter Fachbegrenzer 11 umfasst den Kopfbereich 12 und einen damit verbundenen Fußbereich 13, wobei zumindest ein Teil des Kopfbereiches 12 durch Verschwenken des Fachbegrenzers 11 in eine die Auflageebene 8 durchgreifende und in den Auflagebereich 10 ragende Wirklage bewegt werden kann.

Um das Verschwenken des Fachbegrenzers 11 auf einen bestimmten Verschwenkbereich zu begrenzen, können Anschlagpunkte 14 vorgesehen sein. Fig. 4 zeigt eine Ausführungsform, bei der das Verschwenken des Fachbegrenzers 11 durch Anschlagpunkte 14 begrenzt ist. Der Fachbegrenzer 11 liegt in der Bereitschaftslage mit seinem Fußbereich 13 an einem durch eine Unterkante der Auflageleiste 6 gebildeten Anschlagpunkt 14 und in der Wirklage mit seinem Kopfbereich 12 an einem durch eine Seitenfläche der Auflageleiste 6 gebildeten Anschlagpunkt 14 an. Das Verschwenken des Fachbegrenzers 11 zwischen Wirklage und Bereitschaftslage ist dadurch auf einen Verschwenkwinkel 15, beispielsweise auf 65°, begrenzt.

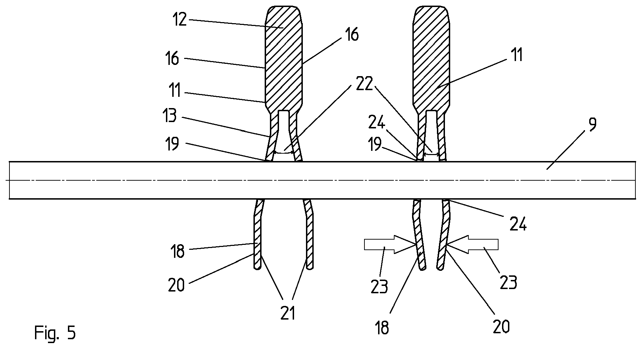

Fig. 5 zeigt einen Schnitt durch zwei nebeneinander angeordnete Fachbegrenzer 11. Der Kopfbereich 12 eines jeden Fachbegrenzers 11 weist zwei Anlegeflächen 16, an denen plattenförmige Gegenstände 1 anliegen können, auf. Der Kopfbereich 12 des Fachbegrenzers 11 kann zwei nicht dargestellte Kammern aufweisen, er kann jedoch auch keine Kammer bzw. weniger oder mehr als zwei Kammern aufweisen. Die Kammern können hohl oder mit beliebigem Material ausgefüllt sein.

An den Kopfbereich 12 des Fachbegrenzers 11 schließt der Fußbereich 13 an, der in den in den Fig. 3 und 5 gezeigten Ausführungsbeispielen zwei plattenförmige Schenkelelemente 18 mit je einem Loch 19 umfasst. Die Schenkelelemente 18 weisen eine Außenfläche 20 und eine dem anderen Schenkelelement 18 des Fachbegrenzers 11 zugewandte Innenfläche 21 auf. Die Innenflächen 21 schließen miteinander einen Winkel 22 ein. Die Schenkelelemente 18 und/oder die Fachbegrenzer 11 sind elastisch biegbar. So können durch an den Außenflächen 20 angreifende, zu den Innenfläche 21 gerichtete, Druckkräfte 23 die Innenflächen 21 aufeinander zu bewegt werden, wobei der Winkel 22 verringert wird.

Ebenso denkbar ist eine Ausführungsform bei der die Schenkelelemente 18, vom Kopfbereich 12 in Richtung Ende des Fußbereiches 13 hin, aufeinander zulaufen und sich einander annähern. Durch an den Innenflächen 21 angreifende, zu den Außenfläche 21 gerichtete, Druckkräfte 23 werden in dieser Ausführungsform die Innenflächen 21 voneinander wegbewegt, sodass ein durch die Innenflächen 21 eingeschlossener Winkel verringert wird, ähnlich wie bei der in Fig. 5 dargestellten Ausführungsform.

Jedes Loch 19 entspricht in seiner Form der Querschnittsform der Positionierleiste 9, ist jedoch geringfügig größer als die Querschnittsfläche der Positionierleiste 9. Dadurch besteht im Bereich der Löcher 19 bei verringertem Winkel 22, wie bei dem rechten Fachbegrenzer 11 in Fig. 5 dargestellt, ein (geringes) Spiel 24 zwischen den Schenkelelementen 18 und der Positionierleiste 9 und der Fachbegrenzer 11 ist entlang der Positionierleiste 9, insbesondere in Längsrichtung der Positionierleiste 9, frei verschiebbar. Bei vergrößertem Winkel 22, wie bei dem linken Fachbegrenzer 11 in Fig. 5 dargestellt, ist die Positionierleiste 9 im Bereich der Löcher 19 der Schenkelelemente 18 verklemmt, wodurch der Fachbegrenzer 11 in seiner gewählten Position an der Positionierleiste 9 reibschlüssig festgelegt ist.

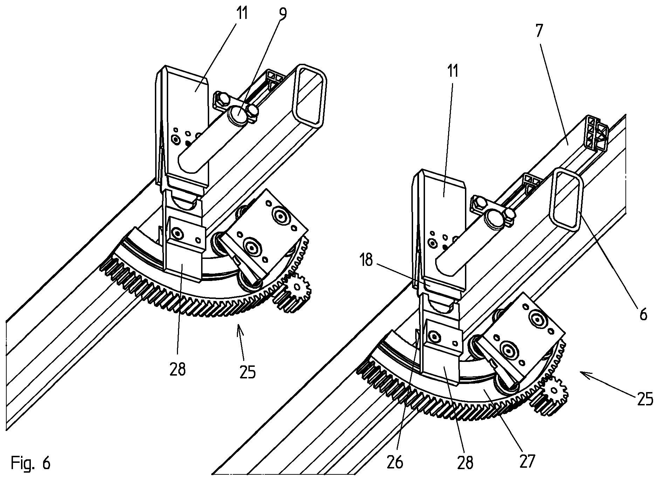

Fig. 6 zeigt zwei Bedienwerkzeuge 25, die entlang nicht dargestellter Schienen im Bereich (beliebiger) Fachbegrenzer 11 positioniert werden können. Durch einen ebenfalls nicht dargestellten Antrieb können Bedienwerkzeuge 25 an einen Fachbegrenzer 11 herangeführt und mit diesem in Wirkkontakt gebracht werden.

Bedienwerkzeuge 25 weisen zwei sich keilförmig verjüngende Vertiefungen 26 auf. Beim Heranführen eines Bedienwerkzeuges 25 an einen Fachbegrenzer 11 treten die Schenkelelemente 18 in die sich verjüngenden Vertiefungen 26 ein, gleiten dabei jeweils an einer schrägen Fläche der Vertiefung 26 entlang und werden, z.B. durch Biegen, aufeinander zu bewegt, wodurch der Winkel 22 zwischen den Innenflächen 21 der Schenkelelemente 18 verringert wird. Der Fachbegrenzer 11 ist dadurch gelöst (entklemmt) und kann durch Verschieben des Bedienwerkzeuges 25 entlang der Schiene, die zur Positionierleiste 9 im Wesentlichen parallel verläuft, entlang der Positionierleiste 9 verschoben werden. Mit Hilfe einer mit dem Bedienwerkzeug 25 in Verbindung stehenden Drehkulisse 27 kann das Bedienwerkzeug 25 verschwenkt werden, wodurch der Fachbegrenzer 11, mit dem das Bedienwerkzeug 25 in Wirkkontakt steht, in seine Wirklage verschwenkt wird.

Die beschriebenen Vorgänge lassen sich auch umkehren, sodass Fachbegrenzer 11 durch das Bedienwerkzeug 25 auch in ihre Bereitschaftslage zurückgeschwenkt werden können und/oder das Bedienwerkzeug 25 durch den Antrieb wieder von Fachbegrenzern 11 entfernt werden kann, wodurch Fachbegrenzer 11 wieder geklemmt und an einer gewählten Position an der Positionierleiste 9 festgelegt sind.

Um jeden beliebigen Fachbegrenzer 11 der Vorrichtung steuern bzw. anfahren und/oder lösen und/oder verschwenken zu können, weist die erfindungsgemäße Vorrichtung ausreichend viele Bedienwerkzeuge 25, insbesondere für jede Positionierleiste 9 ein Bedienwerkzeug 25, auf.

Es sind jedoch auch Ausführungsformen denkbar, bei denen weniger, beispielsweise nur ein einziges Bedienwerkzeug 25, oder mehr Bedienwerkzeuge 25 als Positionierleisten 9 vorgesehen sind, wobei das/die Bedienwerkzeug/e 25 entsprechend bewegbar ist/sind, um in dem Bereich von Fachbegrenzern 11 positioniert werden zu können.

Weiters kann auch eine externe Bedienvorrichtung vorgesehen sein, an der das/die Bedienwerkzeug/e 25 angeordnet ist/sind.

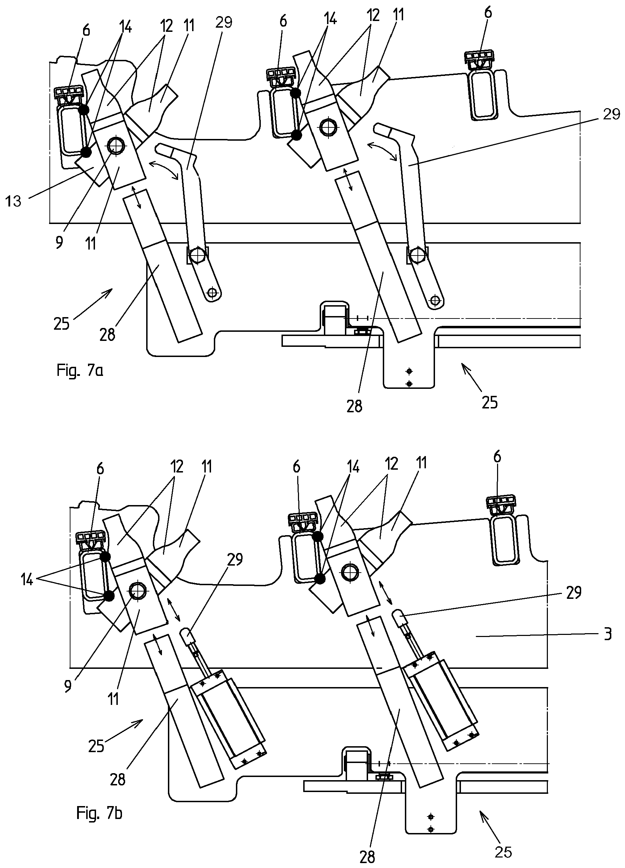

Fig. 7a und 7b zeigen weitere bevorzugte Ausführungsformen erfindungsgemäßer Bedienwerkzeuge 25, die entlang einer nicht näher dargestellten Schiene im Bereich beliebiger Fachbegrenzer 11 positioniert werden können.

Das erfindungsgemäße Bedienwerkzeug 25 besteht insbesondere aus einem Löswerkzeug 28 und einem Verschwenkwerkzeug 29 und kann entlang einer Schiene verschoben werden. Das Löswerkzeug 28 ist so ausgebildet, dass durch geradliniges Anfahren bzw. Andrücken an den Fußbereich 13 eines Fachbegrenzers 11 dieser gelöst (entklemmt) und unabhängig vom Verschwenkwerkzeug 29 betätigt (verstellt) werden kann. In einer bevorzugten Ausführungsform werden die Hübe des Löswerkzeuges 28 und/oder des Verschwenkwerkzeuges 29 hydraulisch bewirkt. Auch pneumatische und/oder elektrische Lösungen sind möglich.

Das Löswerkzeug 28 ist insbesondere so ausgeführt, dass es nach dem Anfahren an einen Fachbegrenzer 11 die Option bietet, den Fachbegrenzer 11 im Anschluss an den Lösvorgang entlang der Positionierleiste 9 zu einer gewählten Position zu verschieben. Ein Ablauf der Schritte zum Verstellen eines Fachbegrenzers 11 kann beispielhaft wie folgt beschrieben werden:
- Positionieren des Bedienwerkzeuges 25 entlang der Schiene im Bereich eines nicht in seiner Wirklage befindlichen Fachbegrenzers 11,
- hydraulisches Betätigen des Verschwenkwerkzeuges 29,
- Verschwenken des Fachbegrenzers 11 durch den Hub des Verschwenkwerkzeuges 29,
- Zurückfahren des Verschwenkwerkzeuges 29 in eine Ruheposition,
- hydraulisches Betätigen des Löswerkzeugs 28,
- Lösen des Fachbegrenzers 11 durch den Hub des Löswerkzeuges 28,
- Verschieben des gelösten Fachbegrenzers 11 mit Hilfe des Löswerkzeuges 28 entlang der Positionierleiste 9 zu einer gewählten Position.

Bei dem beschriebenen Ablauf können einzelne Schritte auch in anderer zeitlicher Abfolge ausgeführt werden. Beispielsweise ist es im Rahmen der Erfindung denkbar, den Fachbegrenzer 11 zuerst zu verschieben und erst danach zu verschwenken. Gegebenenfalls können einzelne der Schritte, wie beispielsweise das Verschieben des gelösten Fachbegrenzers 11, auch ausgelassen werden.

Die in den Fig. 7a und 7b dargestellten Ausführungsformen können auch miteinander kombiniert werden, insbesondere indem ein Bedienwerkzeug 25 die zwei dargestellten Formen des Verschwenkwerkzeuges 29 aufweist.

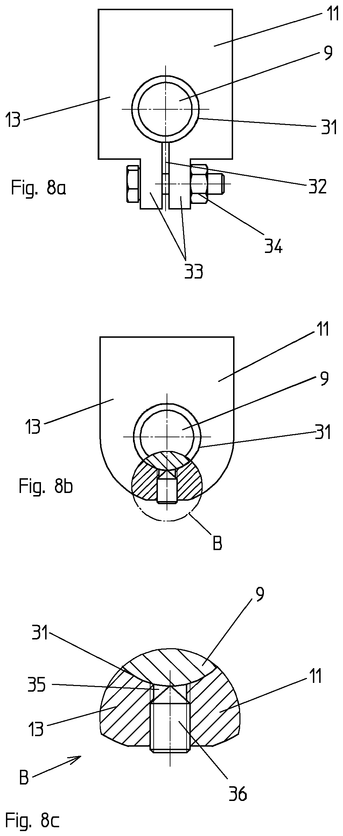

Fig. 8a zeigt eine weitere Ausführungsform eines Fachbegrenzers 11, bei welcher der Fußbereich 13 mit einer Öffnung 31 über eine Positionierleiste 9 geschoben ist.

Ein Spalt 32 verläuft von der Öffnung 31 weg bis zum Ende des Fußbereiches 13, wodurch der Fußbereich 13 in zwei Teilbereiche 33 geteilt ist. Die Teilbereiche 33 sind am Ende des Fußbereiches 13 über eine Schraubverbindung 34 miteinander verbunden, wobei die Schraube der Schraubverbindung 34 durch jeweils ein Durchgangsloch in jedem Teilbereich 33 geführt ist und den Spalt 32 überbrückt. Durch Anziehen der Schraubverbindung 34 (z.B. durch Anziehen einer Mutter an einem Ende der Schraubverbindung 34) werden die Teilbereiche 33 (elastisch) zueinander hingebogen, und die Breite des Spalts 32 und somit auch die Öffnung 31 können verkleinert werden. Ein in einem Löszustand vorhandenes (geringes) Spiel zwischen Fachbegrenzer 11 und Positionierleiste 9 kann durch das Anziehen so weit reduziert werden, bis kein Spiel zwischen Fachbegrenzer 11 und Positionierleiste 9 bleibt und sich der Fachbegrenzer 11 nicht mehr verschieben lässt und somit reibschlüssig festgelegt ist. Durch Lösen der Schraubenverbindung 34 bewegen sich die elastischen Teilbereiche 33 voneinander weg und der Fachbegrenzer 11 kann wieder entlang der Positionierleiste 9 verschoben werden.

Fig. 8b und 8c zeigen eine weitere Ausführungsform eines Fachbegrenzers 11, bei welcher der Fußbereich 13 ebenfalls mit einer Öffnung 31 über eine Positionierleiste 9 geschoben ist.

Auch bei dieser Ausführungsform besteht ein (geringes) Spiel zwischen Positionierleiste 9 und Fachbegrenzer 11, sodass sich der Fachbegrenzer 11 im Löszustand entlang der Positionierleiste 9 verschieben und/oder um die Positionierleiste 9 verschwenken lässt. In eine Gewindebohrung 35, die vom Ende des Fußbereiches 13 zur Öffnung 31 hin verläuft, ist eine Wurmschraube 36 eingeschraubt. Wird die Wurmschraube 36 tief genug in die Gewindebohrung 35 eingeschraubt, wird sie mit einem Ende an die Positionierleiste 9 angepresst und der Fachbegrenzer 11 an der Position, die er gerade einnimmt, festgelegt (verklemmt). Durch Herausdrehen der Wurmschraube 36 aus der Gewindebohrung 35 kann die Klemmverbindung gelöst und der Fachbegrenzer 11 wieder verschoben oder verdreht werden.

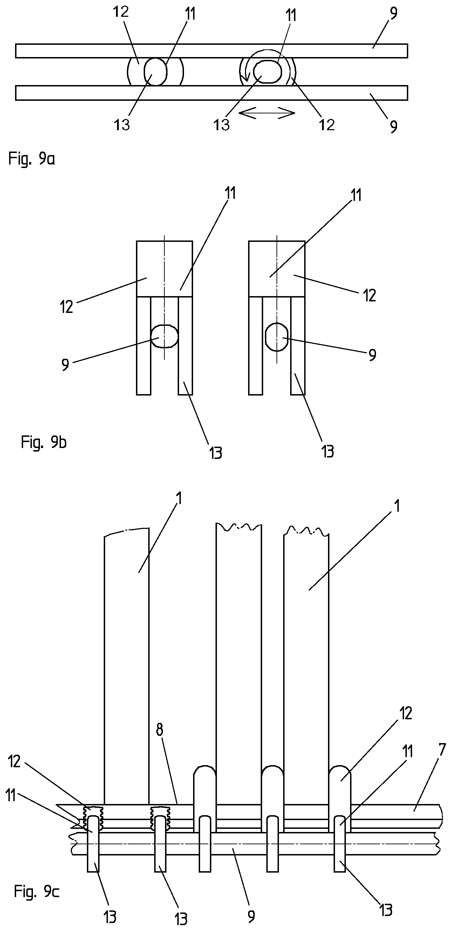

Fig. 9a zeigt eine weitere Ausführungsform eines Fachbegrenzers 11, bei dem ein Fußbereich 13 einen elliptischen Querschnitt mit einer längeren Hauptachse und einer kürzeren Nebenachse aufweist.

Der Fußbereich 13 ist zwischen zwei Positionierleisten 9 angeordnet, wobei der Abstand zwischen den Positionierleisten 9 gleich groß oder (minimal) kleiner als die Länge der Hauptachse und größer als die Länge der Nebenachse des elliptischen Querschnittes des Fußbereiches 13 ist.

In einem Klemmzustand (Fig. 9a links) steht die Hauptachse des elliptischen Querschnittes des Fußbereiches 13 im Wesentlichen normal auf die Positionierleisten 9, wodurch der Fußbereich 13 des Fachbegrenzers 11 zwischen den Positionierleisten 9 eingeklemmt und kraftschlüssig festgelegt ist.

In einem Löszustand (Fig. 9a rechts) liegt die Hauptachse des elliptischen Querschnittes des Fußbereiches 13 schräg oder im Wesentlichen parallel zu den Positionierleisten 9, wodurch der Fußbereich 13 des Fachbegrenzers 11 entklemmt ist und der Fachbegrenzer 11 entlang der Positionierleisten 9 bewegt werden kann. Somit können Fachbegrenzer 11 unterschiedlich breite Fächer begrenzen.

Durch Drehen des Fachbegrenzers 11, beispielsweise um 90°, im oder gegen den Uhrzeigersinn, kann der Fachbegrenzer 11 vom Löszustand in den Klemmzustand und vom Klemmzustand in den Löszustand überführt werden.

Fig. 9b zeigt eine weitere Ausführungsform eines Fachbegrenzers 11, wobei der Fußbereich 13 zwei, vorzugsweise zueinander parallele, Schenkelelemente 18 aufweist, die voneinander um einen Schenkelabstand beabstandet sind.

Zwischen den Schenkelelementen 18 ist eine Positionierleiste 9 mit elliptischem Querschnitt aufgenommen, wobei der elliptische Querschnitt eine längere Hauptachse und eine kürzere Nebenachse aufweist. Der Schenkelabstand ist gleich groß oder (minimal) kleiner als die Länge der Hauptachse und größer als die Länge der Nebenachse des elliptischen Querschnittes der Positionierleiste 9.

Im Klemmzustand steht die Hauptachse der Positionierleiste 9 im Wesentlichen normal auf die Schenkelelemente 18, wodurch diese nach außen gedrückt werden und der Fußbereich 13 des Fachbegrenzers 11 seitlich an der Positionierleiste 9 festgeklemmt und kraftschlüssig festgelegt ist.

Im Löszustand liegt die Hauptachse des elliptischen Querschnittes der Positionierleiste 9 im Wesentlichen schräg oder parallel zu den Schenkelelementen 18, wodurch der Fußbereich 13 des Fachbegrenzers 11 entklemmt ist und der Fachbegrenzer 11 entlang der Positionierleiste 9 bewegt werden kann.

Durch Drehen der Positionierleiste 9, aber auch durch Drehen des Fachbegrenzers 11, beispielsweise um 90° in oder gegen den Uhrzeigersinn, kann der Fachbegrenzer 11 vom Löszustand in den Klemmzustand und vom Klemmzustand in den Löszustand überführt werden.

Besonders günstig ist eine Ausführungsform, bei der sich Kopfbereiche 12 der Fachbegrenzer 11 im Löszustand außerhalb des Auflagebereichs 10 befinden und bei der Fachbegrenzer 11 beim Verschwenken des Kopfbereichs 12 in den Auflagebereich 10 an der Positionierleiste 9 festgeklemmt werden.

Fig. 9c zeigt eine Ausführungsform der erfindungsgemäßen Vorrichtung, bei der Fachbegrenzer 11 mit einem Fluid füllbare Elemente als Kopfbereiche 12 aufweisen.

In einem Zustand, in dem das Fluid nicht unter Druck steht, sind Kopfbereiche 12 der Fachbegrenzer 11 außerhalb des Auflagebereichs 10 und Fachbegrenzer 11 können entlang der Positionierleiste/n 9 verschoben und gegebenenfalls auf bereits beschriebene Art an der/den Positionierleiste/n 9 festgelegt werden.

Durch Befüllen des als füllbares Element ausgeführten Kopfbereiches 12 der Fachbegrenzer 11 mit einem Fluid, beispielsweise einem Gas, oder durch Erhöhen des Druckes im Fluid dehnen sich Kopfbereiche 12 aus, ragen in den Auflagebereich 10 hinein und begrenzen Fächer. In einer bevorzugten Ausführungsform verklemmen Fachbegrenzer 11 durch das Befüllen der Kopfbereiche 12 mit Fluid oder durch Erhöhen des Druckes im Fluid an der Positionierleiste 9 oder zwischen Positionierleisten 9 und sind dadurch kraftschlüssig festgelegt.

Durch Auslassen oder Absaugen des Fluids aus Kopfbereichen 12 oder durch Entlasten des Fluides in Kopfbereichen 12 ziehen sich diese zusammen und werden aus dem Auflagebereich 10 hinausbewegt. Gegebenenfalls werden dadurch auch Fachbegrenzer 11 entklemmt, woraufhin diese an Positionierleisten 9 nicht mehr kraftschlüssig festgelegt sind.

Besonders bevorzugt ist, wenn sich Kopfbereiche 12 durch das Befüllen mit Fluid im Wesentlichen nur in den Auflagebereich 10 hinein ausdehnen und nicht zu den plattenförmigen Gegenständen 1 hin. Somit greifen an den plattenförmigen Gegenständen 1 keine seitlichen Kräfte an, was im Fall von frisch gefertigten Isolierglasscheiben zu unerwünschten Verformungen führen könnte.

Das Befüllen von Kopfbereichen 12 der Fachbegrenzer 11 mit Fluid, das Absaugen desselben oder die Änderung des Druckes im Fluid erfolgt vorzugsweise über ein nicht dargestelltes Leitungssystem, wobei besonders bevorzugt Kopfbereiche 12 der Fachbegrenzer 11 voneinander unabhängig befüllt oder ausgelassen werden können.

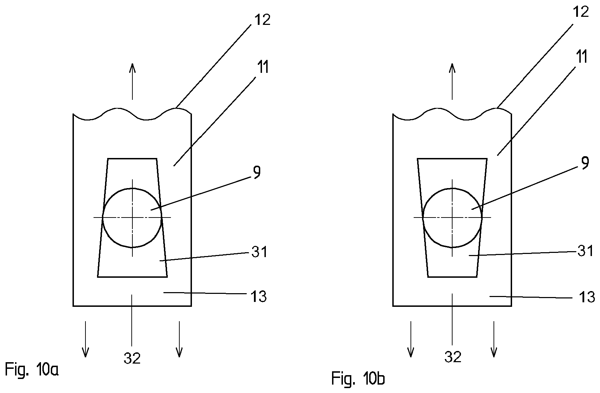

Die Fig. 10a und 10b zeigen zwei weitere Ausführungsformen eines Fachbegrenzers 11, bei denen jeweils der Fußbereich 13 mit einer trapezförmigen oder dreieckigen Öffnung 31 über eine Positionierleiste 9 geschoben ist.

In Fig. 10a verjüngt sich die trapezförmige Öffnung 31 in Richtung Kopfbereich 12 des Fachbegrenzers 11. Die Öffnung 31 ist daher in der Nähe des Kopfbereiches 12 schmäler und an dem vom Kopfbereich 12 entfernten Ende breiter. Im Klemmzustand ist der Kopfbereich 12 des Fachbegrenzers 11 soweit zur Positionierleiste 9 hin bewegt, dass der Fachbegrenzer 11 an der im Querschnitt runden Positionierleiste 9 festgeklemmt, also kraftschlüssig festgelegt ist. Im Löszustand ist der Kopfbereich 12 des Fachbegrenzers 11 soweit von der Positionierleiste 9 weg bewegt, dass der Fachbegrenzer 11 an der Positionierleiste frei verschiebbar und/oder verschwenkbar ist.

Das Festlegen und Lösen der in Fig. 10b dargestellten Ausführungsform eines Fachbegrenzers 11 funktioniert gegengleich zu der in Fig. 10a beschriebenen Ausführungsform, da sich die in Fig. 10b dargestellte, trapezförmige Öffnung 31 in Richtung zum Kopfbereich 12 des Fachbegrenzers 11 hin verbreitert.

In Betracht gezogen ist im Rahmen der Erfindung auch, dass bei den in den Fig. 10a und 10b dargestellten Ausführungsformen der Fachbegrenzer 11 die Öffnung 31 an dem vom Kopfbereich 12 entfernt liegenden Ende des Fußbereiches 13 offen ist, also der Steg 32 fehlt. Dadurch weist der Fußbereich 13 im Wesentlichen zwei Schenkelelemente auf, die miteinander einen in Richtung Kopfbereich 12 hin (Fig. 10a) oder vom Kopfbereich 12 weg (Fig. 10b) zulaufenden spitzen Winkel einschließen.

Zusammenfassend kann eine erfindungsgemäße Vorrichtung wie folgt beschrieben werden:
Eine Vorrichtung zum Lagern und/oder zum Transport von, vorzugsweise im Wesentlichen vertikal ausgerichteten, plattenförmigen Gegenständen 1, insbesondere Isolierglaselementen, mit Auflageebenen 8 und mit Fächer begrenzenden Fachbegrenzern 11, wobei die Auflageebenen 8 einen Auflagebereich 10 begrenzen. Wenigstens Teile von Fachbegrenzern 11 sind in eine Wirklage, in welcher Teile die Auflageebenen 8 durchgreifen und in den Auflagebereich 10 ragen, bewegbar, sodass Fachbegrenzer 11 mit ihren in den Auflagebereich 10 ragenden Teilen im Auflagebereich 10 Fächer für plattenförmige Gegenstände 1 bilden. Fachbegrenzer 11 sind aus der Wirklage heraus in eine Bereitschaftslage bewegbar, in der Fachbegrenzer 11 außerhalb des Auflagebereiches 10 angeordnet sind. Fachbegrenzer 11 sind an Positionierleisten 9 verstellbar angeordnet, entlang der Positionierleisten 9 verschiebbar und mit gewähltem Abstand voneinander an den Positionierleisten 9 gegen Verstellen form- und/oder kraftschlüssig festlegbar. Den Positionierleisten 9 ist wenigstens ein Bedienwerkzeug 25 zugeordnet, wobei das Bedienwerkzeug 25 mit einem Antrieb verbunden ist und parallel zur zugeordneten Positionierleiste 9 in eine einem Fachbegrenzer 11 zugeordnete Stellung bewegbar ist. Fachbegrenzer 11 sind durch das Bedienwerkzeug 25 betätigbar, um die Fachbegrenzer 11, beispielsweise durch das Verschwenken der Fachbegrenzer 11 um eine Positionierleiste 9, zumindest mit einem Teil in den Auflagebereich 10 hinein und/oder aus diesem heraus zu bewegen.

## Patentansprüche

1. Vorrichtung zum Lagern und/oder zum Transport von, vorzugsweise im Wesentlichen vertikal ausgerichteten, plattenförmigen Gegenständen (1), insbesondere Isolierglaselementen, mit Auflageebenen (8) und mit Fächer begrenzenden Fachbegrenzern (11), wobei die Auflageebenen (8) einen Auflagebereich (10) begrenzen, wobei wenigstens Teile von Fachbegrenzern (11) in eine Wirklage, in welcher Teile die Auflageebenen (8) durchgreifen und in den Auflagebereich (10) ragen, bewegbar sind, wobei die Fachbegrenzer (11) mit ihren in den Auflagebereich (10) ragenden Teilen im Auflagebereich (10) Fächer für die plattenförmigen Gegenstände (1) bilden, wobei die Fachbegrenzer (11) aus der Wirklage heraus in eine Bereitschaftslage bewegbar sind, in der die Fachbegrenzer (11) außerhalb des Auflagebereiches (10) angeordnet sind, und wobei die Fachbegrenzer (11) an Positionierleisten (9) verstellbar angeordnet, entlang der Positionierleisten (9) verschiebbar und mit gewähltem Abstand voneinander an den Positionierleisten (9) gegen Verstellen form- und/oder kraftschlüssig festlegbar sind, **dadurch gekennzeichnet, dass** den Positionierleisten (9) wenigstens ein Bedienwerkzeug (25) zugeordnet ist, wobei das Bedienwerkzeug (25) mit einem Antrieb verbunden ist und parallel zur zugeordneten Positionierleiste (9) in eine einem Fachbegrenzer (11) zugeordnete Stellung bewegbar ist, und dass Fachbegrenzer (11) durch das Bedienwerkzeug (25) betätigbar sind, um die Fachbegrenzer (11), beispielsweise durch das Verschwenken der Fachbegrenzer (11) um eine Positionierleiste (9), zumindest mit einem Teil in den Auflagebereich (10) hinein und/oder aus diesem heraus zu bewegen.

2. Vorrichtung nach Anspruch 1, **dadurch gekennzeichnet, dass** Fachbegrenzer (11) an Positionierleisten (9) klemmend festlegbar sind.

3. Vorrichtung nach Anspruch 1 oder 2, **dadurch gekennzeichnet, dass** Fachbegrenzer (11) in der Bereitschaftslage von den Auflageebenen (8) beabstandet angeordnet sind.

4. Vorrichtung nach einem der Ansprüche 1 bis 3, **dadurch gekennzeichnet, dass** Auflageleisten (6) für die Auflage der plattenförmigen Gegenstände (1) im Bereich der Auflageebenen (8), und die Positionierleisten (9) parallel zu den Auflageebenen (8) und außerhalb des Auflagebereiches (10) angeordnet sind.

5. Vorrichtung nach einem der Ansprüche 1 bis 4, **dadurch gekennzeichnet, dass** die Vorrichtung wenigstens ein im Wesentlichen L-förmiges Grundgerüst (2) aufweist, das einen im Wesentlichen waagrecht liegenden Bodenbereich (3) mit einer Auflageebene (8) und einen im Wesentlichen lotrecht stehenden Stützbereich (4) mit einer weiteren Auflageebene (8) umfasst.

6. Vorrichtung nach einem der Ansprüche 1 bis 5, **dadurch gekennzeichnet, dass** Fachbegrenzer (11) einen an einer Positionierleiste (9) angeordneten Fußbereich (13) und einen mit diesem in Verbindung stehenden, insbesondere an diesen angeformten, Kopfbereich (12), der von der Positionierleiste (9) beabstandet ist und der, insbesondere durch ein Verschwenken des Fußbereichs (13), in den Auflagebereich (10) hinein und aus diesem heraus bewegbar ist, aufweisen.

7. Vorrichtung nach Anspruch 6, **dadurch gekennzeichnet, dass** Kopfbereiche (12) wenigstens eine Anlegefläche (16), vorzugsweise zwei Anlegeflächen (16), für plattenförmige Gegenstände (1) aufweisen.

8. Vorrichtung nach Anspruch 6 oder 7, **dadurch gekennzeichnet, dass** Fußbereiche (13) zwei im Wesentlichen voneinander beabstandete Schenkelelemente (18) mit jeweils einer Innenfläche (21) und einer Außenfläche (20) umfassen, wobei die Innenflächen (21) einander zugewandt sind und in einem Klemmzustand des Fachbegrenzers (11) miteinander einen Winkel (22) einschließen, dass die Schenkelelemente (18) elastisch verbiegbar sind und dass in einem Loszustand von Fachbegrenzern (11) bei auf die Außenflächen (20) oder die Innenflächen (21) aufgebrachter Druckkraft (23) der Winkel (22) zwischen den Innenflächen (21) verringert ist.

9. Vorrichtung nach Anspruch 8, **dadurch gekennzeichnet, dass** Schenkelelemente (18) ein in Form und Größe dem Querschnitt der Positionierleiste (9) angepasstes, die Innenfläche (21) und die Außenfläche (20) der Schenkelelemente (18) verbindendes, Loch (19) aufweisen, dass die Positionierleiste (9) das Loch (19) durchgreift, dass im Loszustand bei verringertem Winkel (22) zwischen Positionierleiste (9) und Schenkelelement (18) im Bereich des Loches (19) Spiel (24) vorhanden ist, derart, dass Fachbegrenzer (11) entlang der Positionierleiste (9) bewegbar sind und dass im Klemmzustand bei vergrößertem Winkel (22) die Positionierleiste (9) im Bereich des Loches (19) mit dem Schenkelelement (18) verkantet und der Fachbegrenzer (11) an der Positionierleiste (9) festgelegt, insbesondere geklemmt, ist.

10. Vorrichtung nach einem der Ansprüche 1 bis 9, **dadurch gekennzeichnet, dass** Fachbegrenzer (11) separat oder mehrere, insbesondere benachbarte, Fachbegrenzer (11) gemeinsam, insbesondere durch Verschwenken von Fachbegrenzern (11) um Positionierleisten (9), mit zumindest einem Teil der Fachbegrenzer (11) in den Auflagebereich (10) hinein und aus diesem heraus bewegbar sind.

11. Vorrichtung nach einem der Ansprüche 4 bis 10, **dadurch gekennzeichnet, dass** das Verschwenken von Fachbegrenzern (11) durch eine der Auflageleisten (6) und/oder durch einen Anschlag, insbesondere eine Anschlagleiste, auf einen vorbestimmten und/oder einstellbaren Verschwenkbereich begrenzt ist.

12. Vorrichtung nach einem der Ansprüche 1 bis 11, **dadurch gekennzeichnet, dass** Fachbegrenzer (11) einstückig ausgeführt sind.

13. Vorrichtung nach einem der Ansprüche 1 bis 12, **dadurch gekennzeichnet, dass** Fachbegrenzer (11) durch das Bedienwerkzeug (25) lösbar, insbesondere entklemmbar, entlang der Positionierleiste (9) verschiebbar und wieder festlegbar, insbesondere klemmbar, sind.

14. Vorrichtung nach einem der Ansprüche 1 bis 5, **dadurch gekennzeichnet, dass** Fachbegrenzer (11) ein vorzugsweise automatisch füllbares Element aufweisen, das durch Einleiten von Fluid, wie Gas oder Flüssigkeit, vergrößerbar und dadurch mit wenigstens einem Teil in den Auflagebereich (10) hinein und durch Auslassen des Fluides verkleinerbar und dadurch aus dem Auflagebereich (10) heraus bewegbar ist.

15. Vorrichtung nach Anspruch 14, **dadurch gekennzeichnet, dass** Fachbegrenzer (11) durch Füllen des füllbaren Elements an Positionierleisten (9) festlegbar, insbesondere klemmbar, sind.

16. Verfahren zum Lagern und/oder zum Transport von, vorzugsweise im Wesentlichen vertikal ausgerichteten, plattenförmigen Gegenständen (1), insbesondere Isolierglaselementen, wobei die plattenförmigen Gegenstände (1) in Fächern, die in einem Auflagebereich (10) einer Vorrichtung gebildet werden, aufgenommen werden, wobei die Fächer für die Aufnahme der plattenförmigen Gegenstände (1) durch Fachbegrenzer (11) gebildet werden, und wobei die Breite der Fächer an die Dicke der plattenförmigen Gegenstände (1) angepasst eingestellt wird, indem wenigstens Teile von Fachbegrenzern (11) in den Auflagebereich (10) hinein oder aus diesem heraus bewegt werden und optional der Abstand zwischen Fachbegrenzern (11) geändert wird, **dadurch gekennzeichnet, dass** wenigstens Teile von Fachbegrenzern (11) durch wenigstens ein mit einem Antrieb verbundenes und parallel zu einer zugeordneten Positionierleiste (9) in eine dem Fachbegrenzer (11) zugeordnete Stellung bewegbares Bedienwerkzeug (25) in den Auflagebereich (10) hinein oder aus diesem heraus bewegt werden und optional der Abstand zwischen Fachbegrenzern (11) durch das Bedienwerkzeug (25) geändert wird.

17. Verfahren zum Lagern und/oder zum Transport von, vorzugsweise im Wesentlichen vertikal ausgerichteten, plattenförmigen Gegenständen (1), insbesondere Isolierglaselementen, wobei die plattenförmigen Gegenstände (1) in Fächern, die in einem Auflagebereich (10) einer Vorrichtung gebildet werden, aufgenommen werden, wobei die Fächer für die Aufnahme der plattenförmigen Gegenstände (1) durch Fachbegrenzer (11) gebildet werden, und wobei die Breite der Fächer an die Dicke der plattenförmigen Gegenstände (1) angepasst eingestellt wird, indem wenigstens Teile von Fachbegrenzern (11) in den Auflagebereich (10) hinein oder aus diesem heraus bewegt werden und optional der Abstand zwischen Fachbegrenzern (11) geändert wird, **dadurch gekennzeichnet, dass** wenigstens Teile von Fachbegrenzern (11) mit Hilfe wenigstens eines Bedienwerkzeuges durch Einleiten eines Fluides in füllbare Elemente der Fachbegrenzer (11) in den Auflagebereich (10) hinein oder durch Ablassen oder Entlasten des Fluides aus diesem heraus bewegt werden.

18. Verfahren nach Anspruch 16 oder 17, **dadurch gekennzeichnet, dass** festgelegte Fachbegrenzer (11) zuerst gelöst werden, dann wenigstens Teile dieser Fachbegrenzer (11) bewegt werden und anschließend diese Fachbegrenzer (11) wieder festgelegt werden.

## Claims

1. Device for storing and/or transporting, preferably substantially vertically aligned, plate-like articles (1), in particular insulating glass elements, having support planes (8) and compartment delimiters (11) delimiting compartments, wherein the support planes (8) delimit a support region (10), wherein at least parts of compartment delimiters (11) are movable into an operative position in which parts reach through the support planes (8) and project into the support region (10), wherein the compartment delimiters (11), with their parts projecting into the support region (10), form compartments for the plate-like articles (1), wherein the compartment delimiters (11) are movable out of the operative position into a ready position in which the compartment delimiters (11) are arranged outside the support region (10), and wherein the compartment delimiters (11) are arranged adjustably on positioning strips (9), are displaceable along the positioning strips (9) and can be fixed positively and/or non-positively on the positioning strips (9) against adjustment at a selected distance from one another, **characterized in that** at least one operating tool (25) is associated with the positioning strips (9), wherein the operating tool (25) is connected to a drive and is movable parallel to the associated positioning strip (9) into a position associated with a compartment limiter (11), and **in that** compartment delimiters (11) can be actuated by the operating tool (25) in order to move the compartment delimiters (11), for example by pivoting the compartment delimiters (11) about a positioning strip (9), at least with a portion into and/or out of the support region (10).

2. Device according to claim 1, **characterized in that** compartment delimiters (11) can be fixed in a clamping manner to positioning strips (9).

3. Device according to claim 1 or 2, **characterized in that** compartment delimiters (11) are arranged spaced apart from the support planes (8) in the ready position.

4. Device according to one of claims 1 to 3, **characterized in that** support strips (6) for supporting the plate-like articles (1) are arranged in the region of the support planes (8), and the positioning strips (9) are arranged parallel to the support planes (8) and outside the support region (10).

5. Device according to one of the claims 1 to 4, **characterized in that** the device has at least one substantially L-shaped basic structure (2) which comprises a substantially horizontally lying base region (3) with a support plane (8) and a substantially vertically standing support region (4) with a further support plane (8).

6. Device according to one of the claims 1 to 5, **characterized in that** compartment delimiters (11) have a foot region (13) arranged on a positioning strip (9) and a head region (12) which is connected to and in particular integrally formed on the foot region (13), is spaced apart from the positioning strip (9) and is movable, in particular by pivoting the foot region (13), into and out of the support region (10).

7. Device according to claim 6, **characterized in that** head regions (12) have at least one contact surface (16), preferably two contact surfaces (16), for plate-like articles (1) .

8. Device according to claim 6 or 7, **characterized in that** foot regions (13) comprise two substantially spaced-apart leg elements (18), each having an inner surface (21) and an outer surface (20), wherein the inner surfaces (21) face one another and enclose an angle (22) with one another in a clamping state of the compartment delimiter (11), **in that** the leg elements (18) can be elastically bent and **in that**, in a loose state of compartment delimiters (11), the angle (22) between the inner surfaces (21) is reduced when compression force (23) is applied to the outer surfaces (20) or the inner surfaces (21).

9. Device according to claim 8, **characterized in that** leg elements (18) have a hole (19) which is adapted in shape and size to the cross-section of the positioning strip (9) and connects the inner surface (21) and the outer surface (20) of the leg elements (18), **in that** the positioning strip (9) engages through the hole (19), **in that** in the loose state with a reduced angle (22) between positioning strip (9) and leg element (18) in the region of the hole (19) there is play (24) in such a way that compartment delimiters (11) can be moved along the positioning strip (9) and that in the clamping state with an increased angle (22) the positioning strip (9) in the region of the hole (19) is canted with the leg element (18) and the compartment limiter (11) is fixed, in particular clamped, to the positioning strip (9).

10. Device according to one of claims 1 to 9, **characterized in that** compartment delimiters (11) can be moved separately or a plurality of, in particular adjacent, compartment delimiters (11) can be moved together, in particular by pivoting compartment delimiters (11) about positioning strips (9), with at least some part of the compartment delimiters (11) into and out of the support region (10).

11. Device according to one of claims 4 to 10, **characterized in that** the pivoting of compartment delimiters (11) is limited to a predetermined and/or adjustable pivoting range by one of the support strips (6) and/or by a stop, in particular a stop strip.

12. Device according to one of claims 1 to 11, **characterized in that** compartment delimiters (11) are designed in one piece.

13. Device according to one of claims 1 to 12, **characterized in that** by means of the operating tool (25) compartment delimiters (11) can be released, in particular unclamped, displaced along the positioning strip (9) and fixed again, in particular clamped.

14. Device according to one of claims 1 to 5, **characterized in that** compartment delimiters (11) have a preferably automatically fillable element which can be enlarged by introducing fluid, such as gas or liquid, and can thereby be moved with at least one part into the support region(10) and, by discharging the fluid, can be reduced in size and thus be moved out of the support region (10).

15. Device according to claim 14, **characterized in that** compartment delimiters (11) can be fixed, in particular clamped, to positioning strips (9) by filling the fillable element.

16. Method for storing and/or transporting, preferably substantially vertically aligned, plate-like articles (1), in particular insulating glass elements, wherein the plate-like articles (1) are accommodated in compartments which are formed in a support region (10) of a device, wherein the compartments for accommodating the plate-like articles (1) are formed by compartment delimiters (11), and wherein the width of the compartments is adjusted to the thickness of the plate-like articles (1), in that at least parts of compartment delimiters (11) are moved into or out of the support region (10) and optionally the distance between compartment delimiters (11) is changed, **characterized in that** at least parts of compartment delimiters (11) are moved into or out of the support region (10) by at least one operating tool (25) connected to a drive and movable parallel to an associated positioning strip (9) into a position associated with the compartment limiter (11), and optionally the distance between compartment delimiters (11) is changed by the operating tool (25).

17. Method for storing and/or transporting, preferably substantially vertically aligned, plate-like articles (1), in particular insulating glass elements, wherein the plate-like articles (1) are accommodated in compartments which are formed in a support region (10) of a device, wherein the compartments for accommodating the plate-like articles (1) are formed by compartment delimiters (11), and wherein the width of the compartments is set so as to be adjusted to the thickness of the plate-like articles (1) in that at least parts of compartment delimiters (11) are moved into or out of the support region (10) and optionally the distance between compartment delimiters (11) is changed, **characterized in that** at least parts of compartment delimiters (11) are moved into the support region (10) with the aid of at least one operating tool by introducing a fluid into fillable elements of the compartment delimiters (11) or are moved out of the support region (10) by draining or relieving the fluid.

18. Method according to claim 16 or 17, **characterized in that** fixed compartment delimiters (11) are first released, then at least parts of these compartment delimiters (11) are moved and then these compartment delimiters (11) are fixed again.

## Revendications

1. Dispositif de stockage et/ou de transport d'objets (1) en forme de plaque, de préférence orientés sensiblement verticalement, en particulier d'éléments en verre isolant, comportant des plans de support (8) et des limiteurs de compartiment (11) délimitant des compartiments, les plans de support (8) délimitant une zone de support (10), au moins des parties des limiteurs de compartiment (11) pouvant être déplacées dans une position active, dans laquelle des parties s'étendent à travers les plans de support (8) et font saillie dans la zone de support (10), les limiteurs de compartiment (11) avec leurs parties faisant saillie dans la zone de support (10) formant des compartiments pour les objets en forme de plaque (1) dans la zone de support (10), les limiteurs de compartiment (11) pouvant être déplacés de la position active dans une position de repos dans laquelle les limiteurs de compartiment (11) sont disposés en dehors de la zone de support (10), et les limiteurs de compartiment (11) étant disposés réglables sur des barres de positionnement (9), coulissantes le long des barres de positionnement (9), et pouvant être fixés à une distance choisie les uns des autres sur les barres de positionnement (9) par complémentarité de forme et/ou de manière à être solidaire, **caractérisé en ce qu'**au moins un outil de manœuvre (25) est associé aux barres de positionnement (9), l'outil de manœuvre (25) étant relié à un entraînement et pouvant être déplacé parallèlement à la barre de positionnement (9) associée dans une position associée à un limiteur de compartiment (11), et que des limiteurs de compartiment (11) peuvent être actionnés par l'outil de manœuvre (25) afin de déplacer les limiteurs de compartiment (11) dans la zone de support (10) et/ou hors de celle-ci, par exemple par un pivotement des limiteurs de compartiment (11) autour d'une barre de positionnement (9), au moins par une partie.

2. Dispositif selon la revendication 1, **caractérisé en ce que** des limiteurs de compartiment (11) peuvent être fixés par serrage sur des barres de positionnement (9).

3. Dispositif selon la revendication 1 ou 2, **caractérisé en ce que** des limiteurs de compartiment (11) sont disposés à distance des plans de support (8) dans la position de repos.

4. Dispositif selon l'une des revendications 1 à 3, **caractérisé en ce que** des barres de support (6) pour supporter les objets en forme de plaque (1) sont disposées dans la zone des plans de support (8) et les barres de positionnement (9) sont disposées parallèlement aux plans de support (8) et en dehors de la zone de support (10).

5. Dispositif selon l'une des revendications 1 à 4, **caractérisé en ce que** le dispositif présente au moins une structure de base (2) sensiblement en forme de L qui comprend une zone de fond (3) sensiblement horizontale avec un plan de support (8) et une zone d'appui (4) sensiblement verticale avec un autre plan de support (8).

6. Dispositif selon l'une des revendications 1 à 5, **caractérisé en ce que** des limiteurs de compartiment (11) présentent une zone de pied (13) disposée sur une barre de positionnement (9) et une zone de tête (12) qui est reliée à la zone de pied (13), en particulier formée sur celle-ci, qui est espacée de la barre de positionnement (9) et peut être déplacée dans la zone de support (10) et hors de celle-ci, en particulier par un pivotement de la zone de pied (13).

7. Dispositif selon la revendication 6, **caractérisé en ce que** des zones de tête (12) présentent au moins une surface d'application (16), de préférence deux surfaces d'application (16), pour des objets en forme de plaque (1).

8. Dispositif selon la revendication 6 ou 7, **caractérisé en ce que** des zones de pieds (13) comprennent deux branches (18) sensiblement espacées l'une de l'autre, ayant chacune une surface intérieure (21) et une surface extérieure (20), les surfaces intérieures (21) se faisant face et formant un angle (22) entre elles dans un état serré du limiteur de compartiment (11), que les branches (18) peuvent être pliées élastiquement et que l'angle (22) entre les surfaces intérieures (21) diminue lorsque, dans un état détaché des limiteurs de compartiment (11), une force de compression (23) est appliquée sur les surfaces extérieures (20) ou les surfaces intérieures (21).

9. Dispositif selon la revendication 8, **caractérisé en ce que** des branches (18) présentent un trou (19) dont la forme et la taille sont adaptées à la section transversale de la barre de positionnement (9) et qui relie la surface intérieure (21) et la surface extérieure (20) des branches (18), que la barre de positionnement (9) s'étend à travers le trou (19), que, dans l'état détaché avec un angle diminué (22), il existe dans la zone du trou (19) entre la barre de positionnement (9) et la branche (18) un jeu (24) de telle sorte que des limiteurs de compartiment (11) peuvent être déplacés le long de la barre de positionnement (9) et que, dans l'état serré avec un angle augmenté (22), la barre de positionnement (9) se coince avec la branche (18) dans la zone du trou 19 et le limiteur de compartiment (11) est fixé, en particulier serré, sur la barre de positionnement (9).

10. Dispositif selon l'une des revendications 1 à 9, **caractérisé en ce que** des limiteurs de compartiment (11) peuvent être déplacés séparément ou plusieurs limiteurs de compartiment (11), en particulier adjacents, peuvent être déplacés ensemble dans la zone de support (10) et hors de celle-ci, en particulier par pivotement de limiteurs de compartiment (11) autour de barres de positionnement (9), par au moins une partie des limiteurs de compartiment (11).

11. Dispositif selon l'une des revendications 4 à 10, **caractérisé en ce que** le pivotement de limiteurs de compartiment (11) est limité à une plage de pivotement prédéterminée et/ou réglable par une des barres de support (6) et/ou par une butée, en particulier une barre de butée.

12. Dispositif selon l'une des revendications 1 à 11, **caractérisé en ce que** des limiteurs de compartiment (11) sont réalisés en une seule pièce.

13. Dispositif selon l'une des revendications 1 à 12, **caractérisé en ce que** des limiteurs de compartiment (11) peuvent être détachés, en particulier desserrés, déplacés le long de la barre de positionnement (9) et à nouveau fixés, en particulier serrés, à l'aide de l'outil de manœuvre (25).

14. Dispositif selon l'une des revendications 1 à 5, **caractérisé en ce que** des limiteurs de compartiment (11) présentent un élément de préférence remplissable automatiquement qui peut être agrandi en introduisant un fluide, tel qu'un gaz ou un liquide, et peut ainsi être déplacé par au moins une partie dans la zone de support (10), et qui peut être réduit en taille en déchargeant le fluide et ainsi être déplacé hors de la zone de support (10) .

15. Dispositif selon la revendication 14, **caractérisé en ce que** des limiteurs de compartiment (11) peuvent être fixés, en particulier serrés, sur des barres de positionnement (9) par remplissage de l'élément remplissable.

16. Procédé de stockage et/ou de transport d'objets en forme de plaque (1), de préférence orientés sensiblement verticalement, en particulier d'éléments en verre isolant, dans lequel les objets en forme de plaque (1) sont logés dans des compartiments qui sont formés dans une zone de support (10) d'un dispositif, les compartiments pour recevoir les objets en forme de plaque (1) étant formés par des limiteurs de compartiment (11), et la largeur des compartiments étant adaptée par réglage à l'épaisseur des objets en forme de plaque (1), au moins des parties de limiteurs de compartiment (11) étant déplacées dans la zone de support (10) ou hors de celle-ci et, éventuellement, la distance entre les limiteurs de compartiment (11) étant changée, **caractérisé en ce qu'**au moins des parties de limiteurs de compartiment (11) sont déplacées dans la zone de support (10) ou hors de celle-ci à l'aide d'au moins un outil de manœuvre (25) relié à un entraînement et pouvant être déplacé parallèlement à une barre de positionnement (9) associée dans une position associée au limiteur de compartiment (11) et, éventuellement, la distance entre les limiteurs de compartiment (11) est changée à l'aide de l'outil de manœuvre (25).

17. Procédé de stockage et/ou de transport d'objets en forme de plaque (1), de préférence orientés sensiblement verticalement, en particulier d'éléments en verre isolant, dans lequel les objets en forme de plaque (1) sont logés dans des compartiments qui sont formés dans une zone de support (10) d'un dispositif, les compartiments pour recevoir les objets en forme de plaque (1) étant formés par des limiteurs de compartiment (11), et la largeur des compartiments étant adaptée par réglage à l'épaisseur des objets en forme de plaque (1), au moins des parties de limiteurs de compartiment (11) étant déplacées dans la zone de support (10) ou hors de celle-ci et, éventuellement, la distance entre les limiteurs de compartiment (11) étant changée, **caractérisé en ce qu'**au moins des parties de limiteurs de compartiment (11) sont déplacées dans la zone de support (10) à l'aide d'au moins un outil de manœuvre en introduisant un fluide dans des éléments remplissables des limiteurs de compartiment (11) ou déplacées hors la zone de support (10) en déchargeant ou décomprimant le fluide.

18. Procédé selon la revendication 16 ou 17, **caractérisé en ce que** des limiteurs de compartiment fixés (11) sont d'abord détachés, puis au moins des parties de ces limiteurs de compartiment (11) sont déplacées et ensuite ces limiteurs de compartiment (11) sont de nouveau fixés.
